# EUROPEAN PATENT APPLICATION

(11) **EP 3 683 048 A1**
(43) Date of publication of application: **22.07.2020**
(21) Application number: 19218004.0
(22) Date of filing: 19.12.2019
(51) Int. Cl.: B32B 7/12, B32B 15/08, B32B 15/082, B32B 15/085, B32B 15/088, B32B 15/09, B32B 15/092, B32B 15/095, B32B 15/18, B32B 15/20, B32B 27/30, B32B 27/32, B32B 27/34, B32B 27/36, B32B 27/38, B32B 27/40, B32B 27/42

(54) **BATTERY PACKAGING MATERIAL AND BATTERY**

(30) Priority: 15.01.2019 CN 201910035015
(71) Applicant: Huawei Technologies Co. Ltd., Guangdong 518129 (CN)
(72) Inventor: LU, Lun, Shenzhen, Guangdong 518129 (CN); XU, Fan, Shenzhen, Guangdong 518129 (CN); XIE, Fengchao, Shenzhen, Guangdong 518129 (CN)
(74) Representative: Maiwald Patent- und Rechtsanwaltsgesellschaft mbH

(57) **Abstract**

This application provides a battery packaging material. The battery packaging material has both a high-temperature-resistant fireproof characteristic and a fire-retardant fireproof characteristic, and therefore has a powerful fireproof function. The battery packaging material is successively disposed with a protective layer, a metal layer, and an encapsulating layer from outside to inside, where a first high-temperature-resistant layer is disposed between the metal layer and the protective layer; a second high-temperature-resistant layer is disposed between the metal layer and the encapsulating layer; and a fire-retardant layer is disposed above the protective layer, between the protective layer and the metal layer, between the metal layer and the encapsulating layer, or below the encapsulating layer.

## Description

### TECHNICAL FIELD

This application relates to the battery field, and more specifically, to a battery packaging material and a battery in the battery field.

### BACKGROUND

With the rapid development of electric automobile technologies, a demand for lithium-ion batteries is growing explosively again. Safety of a lithium-ion battery in an electric automobile becomes more prominent. Once a thermal runaway occurs on the battery and causes a fire accident, consequences are disastrous. It can be learned that a fireproof function of the lithium-ion battery is an indispensable function ensuring that the lithium-ion battery is used safely for a long time. A battery packaging material acts as a last fireproof defense of the battery, and therefore a fireproof capability of the battery packaging material urgently needs to be optimized.

### SUMMARY

This application provides a battery packaging material and a battery. The battery packaging material has both a high-temperature-resistant characteristic and a fire-retardant characteristic, and therefore has a powerful fireproof function.

According to a first aspect, a battery packaging material is provided, where the battery packaging material is successively disposed with a protective layer, a metal layer, and an encapsulating layer from outside to inside, where
a first high-temperature-resistant layer is disposed between the metal layer and the protective layer;
a second high-temperature-resistant layer is disposed between the metal layer and the encapsulating layer; and
a fire-retardant layer is disposed above the protective layer, between the protective layer and the metal layer, between the metal layer and the encapsulating layer, or below the encapsulating layer.

In this embodiment of this application, the high-temperature-resistant layers are disposed above and below the metal layer, respectively. On one hand, being isolated by the high-temperature-resistant layers, the metal layer maintains in a stable state instead of melting or shrinking rapidly due to high temperature. On the other hand, when a fire-retardant function of the fire-retardant layer is brought into full play, melting of metal caused by sharp rising in temperature can be avoided, thereby alleviating fireproof pressure of the high-temperature-resistant layers. Therefore, in this embodiment of this application, the high-temperature-resistant layers and the fire-retardant layer can function cooperatively to improve a high-temperature-resistant capability of the metal layer, so that the battery packaging material has a powerful fireproof function.

With reference to the first aspect, in some possible implementations of the first aspect, the first high-temperature-resistant layer is disposed on an upper surface of the metal layer, or the first high-temperature-resistant layer is disposed on a lower surface of the protective layer.

With reference to the first aspect, in some possible implementations of the first aspect, the second high-temperature-resistant layer is disposed on a lower surface of the metal layer, or the second high-temperature-resistant layer is disposed on an upper surface of the encapsulating layer.

In this embodiment of this application, the upper surface and/or the lower surface of the metal layer are/is coated with a high-temperature-resistant coating layer, so that a high-temperature-resistant capability of the metal layer can be improved more effectively.

With reference to the first aspect, in some possible implementations of the first aspect, the first high-temperature-resistant layer is made from at least a high-temperature-resistant material, and the second high-temperature-resistant layer is made from at least a high-temperature-resistant material. For example, the high-temperature-resistant material may be a high-temperature-resistant coating.

With reference to the first aspect, in some possible implementations of the first aspect, the high-temperature-resistant material includes a high-temperature-resistant organic silicon material or a high-temperature-resistant inorganic silicon material.

With reference to the first aspect, in some possible implementations of the first aspect, the first high-temperature-resistant layer further includes a fire-retardant material, the second high-temperature-resistant layer further includes a fire-retardant material, the first high-temperature-resistant layer further includes a bonding material, or the second high-temperature-resistant layer further includes a bonding material.

In this embodiment of this application, the fire-retardant material is dispersedly used in the high-temperature-resistant layer, so that content of the fire-retardant material in the battery packaging material can be increased, further improving a fire-retardant effect of the battery packaging material.

In this embodiment of this application, the fire-retardant layer and the high-temperature-resistant layers may be combined into one layer, so that the layer of material can have both a fire-retardant characteristic and a high-temperature-resistant characteristic, thereby decreasing thickness of the battery packaging material.

In this embodiment of this application, the high-temperature-resistant layer includes the bonding material, so that the high-temperature-resistant layer has good bonding performance. The layers of materials may be bonded by using a high-temperature-resistant material that has a relatively good bonding characteristic, instead of a bonding agent, decreasing thickness of the battery packaging material.

With reference to the first aspect, in some possible implementations of the first aspect, the fire-retardant layer is disposed on a surface of at least one of the protective layer, the metal layer, and the encapsulating layer.

Optionally, the fire-retardant layer may alternatively be disposed on an upper face or a lower face of the first high-temperature-resistant layer, or on an upper face or a lower face of the second high-temperature-resistant layer. This is not limited in the embodiments of this application.

With reference to the first aspect, in some possible implementations of the first aspect, the fire-retardant layer is made from at least a fire-retardant material. For example, the fire-retardant material may be a fire-retardant coating.

With reference to the first aspect, in some possible implementations of the first aspect, the fire-retardant material includes an organic fire-retardant material or an inorganic fire-retardant material, where
the organic fire-retardant material includes at least one of the following: an organic halogen fire retardant, an organic phosphorus fire retardant, an isocyanurate fire retardant, and a melamine-based fire retardant; and
the inorganic fire retardant material includes at least one of the following: magnesium oxide, magnesium hydroxide, aluminum oxide, aluminum hydroxide, ammonium phosphate, and ammonium polyphosphate.

Optionally, the fire-retardant layer may also include a high-temperature-resistant material. Optionally, the fire-retardant layer further includes a bonding material.

With reference to the first aspect, in some possible implementations of the first aspect, a third high-temperature-resistant layer is disposed above the protective layer. Therefore, in this embodiment of this application, high-temperature-resistant performance of the packaging material can be further improved; and in addition, high anti-corrosive performance, high oxidation-resistant performance, and a high wear-resistant and impact-resistant characteristic of the high-temperature-resistant material can be used to improve anti-corrosive and wear-resistant performance of the battery packaging material.

With reference to the first aspect, in some possible implementations of the first aspect, the battery packaging material further includes a bonding layer, where
the bonding layer is disposed between the first high-temperature-resistant layer and the protective layer, the bonding layer is disposed between the metal layer and the first high-temperature-resistant layer, the bonding layer is disposed between the second high-temperature-resistant layer and encapsulating layer, or the bonding layer is disposed between the metal layer and the second high-temperature-resistant layer.

Optionally, in this embodiment of this application, the fire-retardant material is further dispersed in the bonding layer. In this way, on one hand, the layers of materials may be bonded by using the fire-retardant material that has a relatively good bonding characteristic, instead of a bonding agent, so that a total quantity of layers of the battery packaging material can be reduced without the additional bonding agent, thereby decreasing thickness of the battery packaging material. On the other hand, the layers are bonded by using the fire-retardant material that has a relatively good bonding characteristic, instead of the bonding agent, so that a quantity of fire-retardant layers can be increased, and a fire-retardant effect of the battery packaging material is improved.

Optionally, in this embodiment of this application, the high-temperature-resistant layers, the fire-retardant layer, and the bonding layer may be combined into one layer, that is, the layer of materials includes all of the fire-retardant material, the high-temperature-resistant material, and the bonding material. In this way, thickness of the battery packaging material can be further decreased.

Optionally, the high-temperature-resistant layer or the fire-retardant layer may be disposed on a lower surface of the encapsulating layer, so as to further improve the fire-retardant characteristic or the high-temperature-resistant characteristic of the battery packaging material, thereby improving fireproof performance of the battery packaging material.

When the battery packaging material described in this embodiment of this application is used in an extreme thermal-runaway operating condition, on one hand, the high-temperature-resistant layers are disposed above and below the metal layer, respectively. In this case, being isolated by the high-temperature-resistant layers, the metal layer maintains in a stable state instead of melting or shrinking rapidly due to high temperature, so that the fire-retardant material does not keep away from the thermal-runaway point, and can bring a fire-retardant effect of the fire-retardant material into full play; on the other hand, when a fire-retardant function of the fire-retardant layer is brought into full play, thermal runaway can be effectively prevented, thereby avoiding melting of metal caused by sharp rising in temperature is avoided, and alleviating fireproof pressure of the high-temperature-resistant layers. Therefore, in this embodiment of this application, the high-temperature-resistant layers and the fire-retardant layer can function cooperatively, so that the battery packaging material has both a high-temperature-resistant characteristic and a fire-retardant characteristic, and therefore has a powerful and comprehensive fireproof function.

According to a second aspect, a battery is provided, where at least one of a positive electrode, a negative electrode, and an electrolyte of the battery is accommodated in a packaging container formed by the battery packaging material described in any one of the first aspect or the possible implementations of the first aspect.

According to a third aspect, a terminal is provided, where the terminal includes the battery described in the second aspect.

### BRIEF DESCRIPTION OF DRAWINGS

FIG 1 is a schematic diagram of a battery packaging material;
FIG 2 is a schematic diagram of a battery packaging material according to an embodiment of this application;
FIG 3 is a schematic diagram of a battery packaging material according to an embodiment of this application;
FIG 4 is a schematic diagram of a battery packaging material according to an embodiment of this application;
FIG. 5 is a schematic diagram of a battery packaging material according to an embodiment of this application;
FIG. 6 is a schematic diagram of a battery packaging material according to an embodiment of this application;
FIG. 7 is a schematic diagram of a battery packaging material according to an embodiment of this application; and
FIG. 8 is a schematic diagram of a battery packaging material according to an embodiment of this application.

### DESCRIPTION OF EMBODIMENTS

The following describes technical solutions of this application with reference to accompanying drawings.

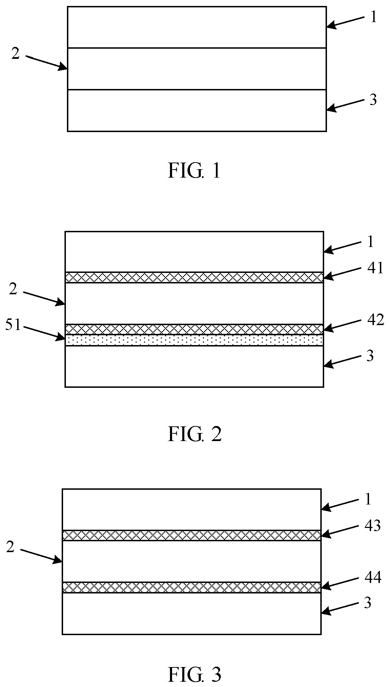

FIG. 1 is a schematic diagram of a battery packaging material. The battery packaging material includes at least a protective layer 1, a metal layer 2, and an encapsulating layer 3. The protective layer 1, the metal layer 2, and the encapsulating layer 3 are successively disposed from outside to inside. During battery assembly, all parts of the encapsulating layer are spliced with each other to seal a battery element. That is, the encapsulating layer is the innermost layer of the battery packaging material, and the protective layer is the outermost layer of the battery packaging material. In this embodiment of this application, for example, the battery packaging material may be formed through heat sealing or deep drawing formation. This is not limited in this embodiment of this application.

The protective layer is used to protect the metal layer and keep air out. Specifically, the protective layer may be of a single-layer structure or of a multi-layer structure that includes at least two layers. When the protective layer is of the multi-layer structure, layers may be made from different materials. In addition, when the protective layer is of the multi-layer structure, the layers may be bonded by using a bonding agent or may be directly laminated without a bonding agent.

A material from which the protective layer is made is insulative. For example, the protective layer may be made from polyester, polyamide, epoxy resin, acrylic resin, fluororesin, polyurethane, and a compound thereof. By way of example and not by way of limitation, the polyester may be polyethylene terephthalate, polybutylene terepthalate, polyethylene naphthalate, polybutylene naphthalate, copolyester, or polycarbonate. By way of example and not by way of limitation, the polyamide may be nylon 6, nylon 66, copolymer of nylon 6 and nylon 66, nylon 610, or poly-meta-xylylene adipamide (MXD6).

The metal layer is capable of improving strength of the packing material and improving an external-force-resistant capability of an electrochemical cell. In addition, the metal layer can be used as a block layer to prevent vapor, oxygen, light, or the like from intruding a battery. The metal layer may be made from aluminum foil or steel foil. When the metal layer is made from aluminum foil, the battery packaging material may be referred to as an aluminum-plastic composite membrane (aluminum-plastic membrane for short). When the metal layer is made from steel foil, the battery packaging material may be referred to as a steel-plastic composite membrane (steel-plastic membrane for short). A thickness of the metal layer is usually about 10 µm to 200 µm.

The encapsulating layer is used to protect the electrochemical cell and resist corrosion. Specifically, during battery assembly, all parts of the encapsulating layer are spliced with each other to seal the battery element. The encapsulating layer may be of a single-layer structure or of a multi-layer structure that includes at least two layers. When the encapsulating layer is of the multi-layer structure, layers may be made from different materials. In addition, when the encapsulating layer is of the multi-layer structure, the layers may be bonded by using a bonding agent or may be directly laminated without a bonding agent.

For example, the encapsulating layer is made from polyolefin, acid-modified polyolefin, and a compound thereof. By way of example and not by way of limitation, the polyolefin may be low-density, medium-density, or high-density polyethylene, linear low-density polyethylene, homo-polypropylene, or random or block copolymer of propylene and ethylene or other α-olefin. Acid-modified polyolefin is a substance obtained by modifying the foregoing polyolefin by using carboxylic acid. The carboxylic acid used for modification may be, for example, maleic acid, acrylic acid, itaconic acid, crotonic acid, or maleic anhydride.

An embodiment of this application provides a battery packaging material. A protective layer, a metal layer, and an encapsulating layer are used as primary substrates of the battery packaging material. High-temperature-resistant layers and a fire-retardant layer are disposed in the battery packaging material, for example, surfaces of all or some of the substrates are coated with a high-temperature-resistant coating and a fire-retardant coating, so that the battery packaging material has both a high-temperature-resistant characteristic and a fire-retardant characteristic, and therefore has a powerful fireproof function. For the protective layer, the metal layer, and the encapsulating layer, refer to the description in FIG. 1.

In this embodiment of this application, the battery packaging material is successively disposed with the protective layer, the metal layer, and the encapsulating layer from outside to inside. A first high-temperature-resistant layer is disposed between the metal layer and the protective layer. A second high-temperature-resistant layer is disposed between the metal layer and the encapsulating layer. The fire-retardant layer is disposed above the protective layer, between the protective layer and the metal layer, between the metal layer and the encapsulating layer, or below the encapsulating layer.

Therefore, in this embodiment of this application, high-temperature-resistant layers are disposed above and below the metal layer, respectively. On one hand, being isolated by the high-temperature-resistant layers, the metal layer maintains in a stable state instead of melting or shrinking rapidly due to high temperature. On the other hand, when a fire-retardant function of the fire-retardant layer is brought into full play, melting of metal caused by sharp rising in temperature can be avoided, thereby alleviating fireproof pressure of the high-temperature-resistant layers. Therefore, in this embodiment of this application, the high-temperature-resistant layers and the fire-retardant layer can function cooperatively to improve a high-temperature-resistant capability and a fire-retardant capability of the entire packaging material, so that the battery packaging material has a powerful fireproof function.

Optionally, in this embodiment of this application, the high-temperature-resistant layer is made from at least a high-temperature-resistant material. For example, the high-temperature-resistant material may be a high-temperature-resistant coating.

Specifically, the high-temperature-resistant material is capable of maintaining stable for a long time at a temperature about 400°C to 1200°C, thereby effectively improving a high-temperature-resistant capability of the battery packaging material (in particular, the metal layer). Various organic high-temperature-resistant materials or inorganic high-temperature-resistant materials may be selected for the high-temperature-resistant material, and include but are not limited to various high-temperature-resistant organic silicon materials and high-temperature-resistant inorganic silicon materials.

In a possible implementation, the high-temperature-resistant material may be a high-temperature-resistant coating made from pure methylphenyl silicone resin, low-melting-point glass powder, chromium sesquioxide, porcelain clay, aluminum powder, talcum powder, aluminum stearate, barium metaborate, phthalic ester, a silane coupling agent, and xylene.

In a possible implementation, the high-temperature-resistant material may be a high-temperature-resistant coating made from Li-bentonite, modified organic silicon resin, polyurethane, aluminum silicate fiber, talcum powder, silica sol, mineral oil, C-12 alcohol ester, propylene glycol phenyl ether, carboxy methyl cellulose, polycarboxylic acid sodium, polymethylphenyl silicone, and deionized water.

In a possible implementation, the high-temperature-resistant material may be a high-temperature-resistant coating made from anhydrous alcohol, modified silicon carbide, modified silica sol, aluminum sol, and aluminum dihydric phosphate.

In a possible implementation, the high-temperature-resistant material may be a high-temperature-resistant coating made from inorganic silicone resin, titanium dioxide, mica powder, tungsten powder, modified silicon carbide, and a dispersant.

In a possible implementation, the high-temperature-resistant material may be a high-temperature-resistant coating made from polyurethane, boron phenolic resin, polytetrafluorethylene, nano silica sol, micaceous iron oxide, fine ceramic powder, hydroxyethyl cellulose, hydroxyl terminated polyester polysiloxane containing fluorine, dimer ricinoleic acid ester, 2-amino-2-methyl-1-propanol, glyceryl monostearate, calcium carbonate, polyamide, DY121, and ethyl acetate.

It should be noted that the high-temperature-resistant materials described above are merely used as examples, and this embodiment of this application is not limited thereto. For example, ingredients of each high-temperature-resistant material may further include another type of material, or the high-temperature-resistant material may further include another ingredient.

Optionally, in this embodiment of this application, the fire-retardant layer is made from at least a fire-retardant material. For example, the fire-retardant material may be a fire-retardant coating.

Specifically, the fire-retardant material mainly plays a function in proactively retarding fire. For example, the fire-retardant material may be a non-expanding organic fireproof material or an expanding organic fireproof material. The non-expanding fire-retardant material mainly generates fire-retardant gas (for example, HCl, HBr, carbon dioxide, or ammonia) through thermal decomposition, to inhibit generation of open flame. The expanding fire-retardant material mainly generates fire-retardant gas (for example, nitrogen or ammonia) through thermal decomposition, to further facilitate blowing of carburetant to play a fire-retardant function. For example, a temperature at which the fire-retardant material is decomposed by heat is about 100°C to 300°C. This is not limited in this embodiment of this application.

Various organic fire retardants or inorganic fire retardants may be selected as the fire-retardant material. The organic fire retardants include but are not limited to an organic halogen fire retardant, an organic phosphorus fire retardant, an isocyanurate fire retardant, and a melamine-based fire retardant. The inorganic fire retardants include but are not limited to magnesium oxide, magnesium hydroxide, aluminum oxide, aluminum hydroxide, ammonium phosphate, and ammonium polyphosphate.

In a possible implementation, the fire-retardant material may be a fire-retardant coating made from polyvinyl alcohol, magnesium hydroxide, and water.

In a possible implementation, the fire-retardant material may be a fire-retardant coating made from amine resin, vinyl acetate resin, guanylurea phosphate, melamine, pentaerythritol, a BYK310 auxiliary agent, simethicone, titanium dioxide, and water.

In a possible implementation, the fire-retardant material may be a fire-retardant coating made from phosphorus-containing waterborne polyurethane resin, titanium dioxide, simethicone, and a BYK-154 auxiliary agent.

FIG. 2 is a schematic diagram of a battery packaging material according to an embodiment of this application. As shown in FIG. 2, a high-temperature-resistant layer 41 (an example that can be corresponding to the first high-temperature-resistant layer in the foregoing descriptions) is disposed between a metal layer 2 and a protective layer 1, a high-temperature-resistant layer 42 (an example that can be corresponding to the second high-temperature-resistant layer in the foregoing descriptions) is disposed between the metal layer 2 and an encapsulating layer 3, and a fire-retardant layer 51 is disposed above the encapsulating layer 3.

In an implementation, the high-temperature-resistant layer 41 may be disposed on an upper surface of the metal layer 2. Alternatively, in another implementation, the high-temperature-resistant layer 41 may be disposed on a lower surface of the protective layer 1.

Specifically, the upper surface of the metal layer may be coated with a high-temperature-resistant coating, to form the high-temperature-resistant layer 41, or the lower surface of the protective layer may be coated with the high-temperature-resistant coating, to form the high-temperature-resistant layer 41.

In an implementation, the high-temperature-resistant layer 42 may be disposed on a lower surface of the metal layer 2. Alternatively, in another implementation, the high-temperature-resistant layer 42 may be disposed on an upper surface of the encapsulating layer 3.

Specifically, the lower surface of the metal layer may be coated with a high-temperature-resistant coating, to form the high-temperature-resistant layer 42, or the upper surface of the encapsulating layer may be coated with the high-temperature-resistant coating, to form the high-temperature-resistant layer 42.

In this embodiment of this application, a thickness of the high-temperature-resistant layer may be about 3 µm to 100 µm, and preferably, may be about 5 µm to 20 µm. In addition, the high-temperature-resistant layer may be implemented through manual coating, or may be implemented through spray coating by using an automation device. This is not limited in this embodiment of this application.

In this embodiment of this application, the upper surface and/or the lower surface of the metal layer are/is coated with a high-temperature-resistant coating layer, so that a high-temperature-resistant capability of the metal layer can be improved more effectively.

In an optional embodiment of this application, as shown in FIG. 2, the fire-retardant layer 51 may be disposed on the upper surface of the encapsulating layer.

Specifically, the upper surface of the encapsulating layer may be coated with a fire-retardant coating, to form the fire-retardant layer. The fire-retardant layer may be implemented through manual coating, or may be implemented through spray coating by using an automation device. This is not limited in this embodiment of this application. A thickness of the fire-retardant layer may be about 5 µm to 100 µm, and preferably, may be about 10 µm to 20 µm.

In some optional embodiments of this application, the fire-retardant layer may alternatively be disposed on an upper surface or the lower surface of the protective layer, the upper surface or the lower surface of the metal layer, or a lower surface of the encapsulating layer. This is not limited in this embodiment of this application.

It should be noted that, considering that the lower surface of the encapsulating layer (that is, an inner surface) is in direct contact with an electrolyte, the fire-retardant layer or the high-temperature-resistant layer is not disposed on the lower surface of the encapsulating layer, so as to prevent reaction between the electrolyte and various organic or inorganic materials in the fire-retardant layer or the high-temperature-resistant layer. However, with the development of technologies, when a material that does not react with the electrolyte emerges, the fire-retardant layer or the high-temperature-resistant layer may alternatively be disposed on the lower surface of the encapsulating layer.

Alternatively, in some optional embodiments of this application, the fire-retardant layer may be disposed on an upper face or a lower face of the high-temperature-resistant layer 41, or on an upper face or a lower face of the high-temperature-resistant layer 42. This is not limited in this embodiment of this application. For example, after the high-temperature-resistant coating is coated, the high-temperature-resistant layer may be coated with the fire-retardant coating. Alternatively, after the fire-retardant coating is coated, the fire-retardant layer is coated with a high-temperature-resistant coating layer.

Optionally, the high-temperature-resistant layer may further include a fire-retardant material.

In an example, in FIG. 2, the high-temperature-resistant layer 41 may include a fire-retardant material, and/or the high-temperature-resistant layer 42 may further include a fire-retardant material.

In this way, in this embodiment of this application, the fire-retardant material is dispersedly used in the high-temperature-resistant layer, so that content of the fire-retardant material in the battery packaging material can be increased, further improving a fire-retardant effect of the battery packaging material.

It should be understood that, in this embodiment of this application, the high-temperature-resistant layer may further include the fire-retardant material. That is, the fire-retardant layer may also include a high-temperature-resistant material. In other words, in this case, this layer of material may be further referred to as a high-temperature-resistant fire-retardant layer. This is not limited in this embodiment of this application.

In an example, FIG. 3 is a schematic diagram of a battery packaging material according to an embodiment of this application. As shown in FIG. 3, a high-temperature-resistant layer 43 (an example that can be corresponding to the first high-temperature-resistant layer in the foregoing descriptions) is disposed between a metal layer 2 and a protective layer 1, and a high-temperature-resistant layer 44 (an example that can be corresponding to the second high-temperature-resistant layer in the foregoing descriptions) is disposed between the metal layer 2 and an encapsulating layer 3. The high-temperature-resistant layer 43 includes a fire-retardant material, and/or the high-temperature-resistant layer 44 includes a fire-retardant material. In this case, when the high-temperature-resistant layer 43 includes the fire-retardant material, the high-temperature-resistant layer 43 may also be referred to as a high-temperature-resistant fire-retardant layer 43. When the high-temperature-resistant layer 44 includes the fire-retardant material, the high-temperature-resistant layer 44 may also be referred to as a high-temperature-resistant fire-retardant layer 44.

In this embodiment of this application, the fire-retardant layer and the high-temperature-resistant layers are combined into one layer, so that the layer of material can have both a fire-retardant characteristic and a high-temperature-resistant characteristic, thereby decreasing thickness of the battery packaging material.

Optionally, the high-temperature-resistant layer may further include a bonding material. That is the high-temperature-resistant layer may also have good bonding performance. In an example, the high-temperature-resistant layer 41 may include a bonding material, and/or the high-temperature-resistant layer 42 may further include a bonding material.

In this way, in this embodiment of this application, the high-temperature-resistant layer includes the bonding material, so that the high-temperature-resistant layer has good bonding performance. The layers of materials may be bonded by using a high-temperature-resistant material that has a relatively good bonding characteristic, instead of a bonding agent, decreasing thickness of the battery packaging material.

For example, the high-temperature-resistant material that has relatively good bonding performance may be a high-temperature-resistant coating made from Li-bentonite, modified organic silicon resin, polyurethane, aluminum silicate fiber, talcum powder, silica sol, mineral oil, C-12 alcohol ester, propylene glycol phenyl ether, carboxy methyl cellulose, polycarboxylic acid sodium, polymethylphenyl silicone, and deionized water. This is not limited in this embodiment of this application.

Optionally, in this embodiment of this application, the battery packaging material further includes a first bonding layer, and the first bonding layer is disposed between the first high-temperature-resistant layer and the protective layer.

In a possible implementation, after an upper surface of the metal layer is coated with the high-temperature-resistant layer, the protective layer and the metal layer whose upper surface is coated with the high-temperature-resistant coating may be bonded by using a bonding agent.

In a possible implementation, after an upper surface of the metal layer is coated with the high-temperature-resistant layer, and a lower surface of the protective layer is coated with the fire-retardant layer, the protective layer whose lower surface is coated with the fire-retardant material and the metal layer whose upper surface is coated with the high-temperature-resistant coating may be bonded by using a bonding agent.

Alternatively, the first bonding layer may be disposed between the metal layer and the first high-temperature-resistant layer.

In a possible implementation, after a lower surface of the protective layer is coated with the high-temperature-resistant layer, the protective layer whose lower surface is coated with the high-temperature-resistant coating and the metal layer may be bonded by using a bonding agent.

In a possible implementation, after an upper surface of the metal layer is coated with the fire-retardant layer, and a lower surface of the protective layer is coated with the high-temperature-resistant layer, the protective layer whose lower surface is coated with the high-temperature-resistant material and the metal layer whose upper surface is coated with the fire-retardant material may be bonded by using a bonding agent.

Optionally, in this embodiment of this application, the battery packaging material further includes a second bonding layer, and the second bonding layer is disposed between the second high-temperature-resistant layer and the encapsulating layer.

In a possible implementation, after a lower surface of the metal layer is coated with the high-temperature-resistant layer, the encapsulating layer and the metal layer whose lower surface is coated with the high-temperature-resistant coating may be bonded by using a bonding agent.

In a possible implementation, after a lower surface of the metal layer is coated with the high-temperature-resistant layer, and an upper surface of the encapsulating layer is coated with the fire-retardant layer, the encapsulating layer whose upper surface is coated with the fire-retardant material and the metal layer whose lower surface is coated with the high-temperature-resistant coating may be bonded by using a bonding agent.

Alternatively, the second bonding layer may be disposed between the metal layer and the second high-temperature-resistant layer.

In a possible implementation, after an upper surface of the encapsulating layer is coated with the high-temperature-resistant layer, the metal layer and the encapsulating layer whose upper surface is coated with the high-temperature-resistant coating may be bonded by using a bonding agent.

In a possible implementation, after a lower surface of the metal layer is coated with the fire-retardant layer, and an upper surface of the encapsulating layer is coated with the high-temperature-resistant layer, the encapsulating layer whose upper surface is coated with the high-temperature-resistant material and the metal layer whose lower surface is coated with the fire-retardant material may be bonded by using a bonding agent.

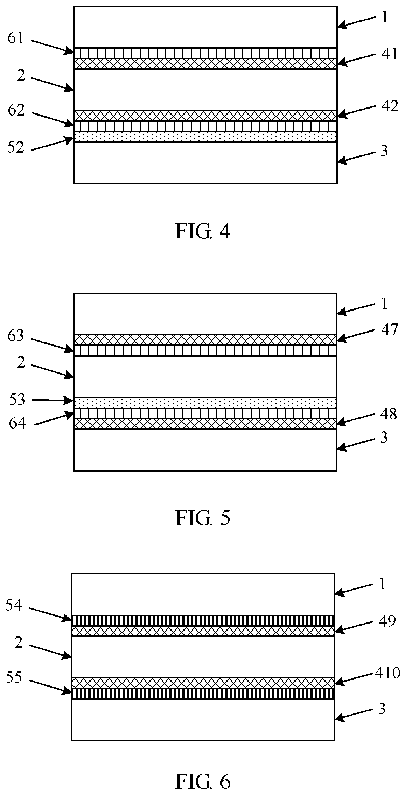

In an example, FIG. 4 is a schematic diagram of a battery packaging material according to an embodiment of this application. As shown in FIG. 4, the battery packaging material successively includes, from outside to inside, a protective layer 1, a bonding layer 61 (an example that can be corresponding to the first bonding layer in the foregoing descriptions), a high-temperature-resistant layer 41 (an example that can be corresponding to the first high-temperature-resistant layer in the foregoing descriptions), a metal layer 2, a high-temperature-resistant layer 42 (an example that can be corresponding to the second high-temperature-resistant layer in the foregoing descriptions), a bonding layer 62 (an example that can be corresponding to the second bonding layer in the foregoing descriptions), a fire-retardant layer 51, and an encapsulating layer 3.

The following shows an example of fabrication of the battery packaging material shown in FIG. 4. First, an upper surface and a lower surface of the metal layer 2 are coated with high-temperature-resistant coatings, respectively, to form the high-temperature-resistant layer 41 and the high-temperature-resistant layer 42; then, an upper surface of the encapsulating layer 3 is coated with a fire-retardant coating, to form the fire-retardant layer 51; the protective layer, the metal layer whose upper surface and lower surface are coated with the high-temperature-resistant coatings, and the encapsulating layer whose upper surface is coated with the fire-retardant coating are bonded by using a bonding agent; and finally, the layers of materials may be composed through press fit or heat fit, to obtain the finished battery packaging material.

In an example, FIG. 5 is a schematic diagram of a battery packaging material according to an embodiment of this application. As shown in FIG. 5, the battery packaging material successively includes, from outside to inside, a protective layer 1, a high-temperature-resistant layer 47 (an example that can be corresponding to the first high-temperature-resistant layer in the foregoing descriptions), a bonding layer 63 (an example that can be corresponding to the first bonding layer in the foregoing descriptions), a metal layer 2, a fire-retardant layer 53, a bonding layer 64 (an example that can be corresponding to the second bonding layer in the foregoing descriptions), a high-temperature-resistant layer 48 (an example that can be corresponding to the second high-temperature-resistant layer in the foregoing descriptions), and an encapsulating layer 3.

The following shows an example of fabrication of the battery packaging material shown in FIG. 5. First, a lower surface of the protective layer is coated with a high-temperature-resistant coating, to form the high-temperature-resistant layer 47, an upper surface of the encapsulating layer is coated with a high-temperature-resistant coating, to form the high-temperature-resistant layer 48, and a lower surface of the metal layer 2 is coated with a fire-retardant coating, to form the fire-retardant layer 53; then, the protective layer whose lower surface is coated with a high-temperature-resistant material, the metal layer whose lower surface is coated with the fire-retardant coating, and the encapsulating layer whose upper surface is coated with the high-temperature-resistant coating are bonded by using a bonding agent; and finally, the layers of materials may be composed through press fit or heat fit, to obtain the finished battery packaging material.

In this embodiment of this application, the bonding layer is used to bond the protective layer and the metal layer or bond the metal layer and the encapsulating layer. The bonding layer is made from a bonding agent capable of bonding the protective layer and the metal layer or bonding the metal layer and the encapsulating layer. The bonding agent from which the bonding layer is made may be a two-component curing bonding agent or may be a one-component curing bonding agent. In addition, a bonding mechanism of the bonding agent herein may be one of chemical reaction, solvent evaporation, hot melting, or heat press. This is not limited in this embodiment of this application.

For example, the bonding layer is made from various agents of a polyester class, a polyethyleneimine class, a polyether class, a cyanoacrylate class, a carbamate class, an organic titanium class, a polyether carbamate class, an epoxy resin class, a polyester polyurethane class, an imide class, an isocyanate class, a polyolefin class, and an organic silicon class.

Optionally, a thickness of the bonding layer may be about 2 µm to 50 µm, and preferably, may be about 3 µm to 25 µm.

Optionally, in this embodiment of this application, the fire-retardant layer may further include a bonding material. That is, in this embodiment of this application, the fire-retardant layer may also have good bonding performance. In other words, in this embodiment of this application, the fire-retardant material is further dispersed in the bonding layer.

In this way, on one hand, the layers of materials may be bonded by using the fire-retardant material that has a relatively good bonding characteristic, instead of a bonding agent, so that a total quantity of layers of the battery packaging material can be reduced without the additional bonding agent, thereby decreasing thickness of the battery packaging material. On the other hand, the layers are bonded by using the fire-retardant material that has a relatively good bonding characteristic, instead of the bonding agent, so that a quantity of fire-retardant layers can be increased, and a fire-retardant effect of the battery packaging material is improved.

For example, the fire-retardant material that has good bonding performance may be a fire-retardant coating made from phosphorus-containing waterborne polyurethane resin, titanium dioxide, simethicone, and a BYK-154 auxiliary agent. This is not limited in this embodiment of this application.

FIG. 6 is a schematic diagram of a battery packaging material according to an embodiment of this application. As shown in FIG. 6, the battery packaging material successively includes, from outside to inside, a protective layer 1, a fire-retardant layer 54, a high-temperature-resistant layer 49 (an example corresponding to the first high-temperature-resistant layer in the foregoing descriptions), a metal layer 2, a high-temperature-resistant layer 410 (an example corresponding to the second high-temperature-resistant layer in the foregoing descriptions), a fire-retardant layer 55, and an encapsulating layer 3. The fire-retardant layer 54 and the fire-retardant layer 55 have relatively good bonding performance. Herein, the fire-retardant layer 54 is also referred to as a bonding layer 54, and the fire-retardant layer 55 may also be referred to as a bonding layer 55. This is not limited in this embodiment of this application.

The following shows an example of fabrication of the battery packaging material. First, an upper surface and a lower surface of the metal layer 2 are coated with high-temperature-resistant coatings, respectively, to form the high-temperature-resistant layer 49 and the high-temperature-resistant layer 410; then, the protective layer, the metal layer whose upper surface and lower surface are coated with the high-temperature-resistant coatings, and the encapsulating layer are bonded by using a bonding agent, and a fire retardant is dispersed in the bonding agent herein; and finally, the layers of materials may be composed through press fit or heat fit, to obtain the finished battery packaging material.

Optionally, in this embodiment of this application, the high-temperature-resistant layers, the fire-retardant layer, and the bonding layer may be combined into one layer, that is, the layer of materials includes all of the fire-retardant material, the high-temperature-resistant material, and the bonding material. In this way, thickness of the battery packaging material can be further decreased.

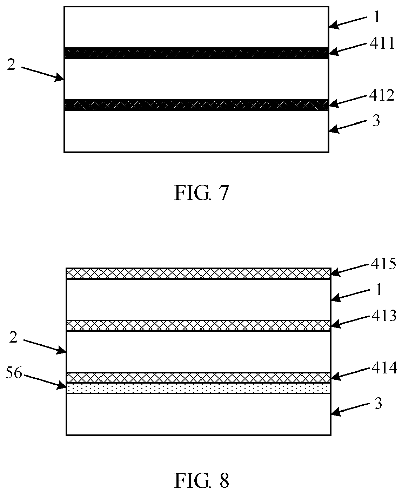

In an example, FIG. 7 is a schematic diagram of a battery packaging material according to an embodiment of this application. As shown in FIG. 7, the battery packaging material successively includes a protective layer 1, a composite layer 411, a metal layer 2, a composite layer 412, and an encapsulating layer 3 from outside to inside. The composite layer 411 may be obtained by composing a high-temperature-resistant material and a bonding material, or may be obtained by composing a high-temperature-resistant material, a fire-retardant material, and a bonding material. The composite layer 412 may be obtained by composing a high-temperature-resistant material and a bonding material, or may be obtained by composing a high-temperature-resistant material, a fire-retardant material, and a bonding material. At least one of the composite layer 411 and the composite layer 412 includes the fire-retardant material. Herein, the composite layer may also be referred to as another name, and this is not limited in this embodiment of this application.

Optionally, in this embodiment of this application, a third high-temperature-resistant layer is disposed above the protective layer.

FIG. 8 shows an example of a battery packaging material in this application. The battery packaging material is successively disposed with, from outside to inside, a high-temperature-resistant layer 415 (an example corresponding to the third high-temperature-resistant layer in the foregoing descriptions), a protective layer 1, a high-temperature-resistant layer 413 (corresponding to the first high-temperature-resistant layer in the foregoing descriptions), a metal layer 2, a high-temperature-resistant layer 414 (an example corresponding to the second high-temperature-resistant layer in the foregoing descriptions), a fire-retardant layer 56 and an encapsulating layer 3. The high-temperature-resistant layer 415 is disposed on an upper surface of the protective layer.

In an optional embodiment, in the battery packaging material shown in FIG. 8, the fire-retardant layer or another layer structure may be further disposed above the high-temperature-resistant layer 415. This is not limited in this embodiment of this application.

In another optional embodiment, the high-temperature-resistant layer 415 may be disposed on the outermost layer of the battery packaging material. Optionally, the fire-retardant layer or another layer structure may alternatively be disposed between the high-temperature-resistant layer 415 and the protective layer. This is not limited in this embodiment of this application.

Therefore, in this embodiment of this application, high-temperature-resistant performance of the packaging material can be further improved; and in addition, high anti-corrosive performance, high oxidation-resistant performance, and a high wear-resistant and impact-resistant characteristic of a high-temperature-resistant material can be used to improve anti-corrosive and wear-resistant performance of the battery packaging material.

In some possible implementations of this application, the high-temperature-resistant layer or the fire-retardant layer may alternatively be disposed on a lower surface of the encapsulating layer, so as to further improve a fire-retardant characteristic or a high-temperature-resistant characteristic of the battery packaging material, thereby improving fireproof performance of the battery packaging material.

In addition, in the prior art, a fire-retardant coating layer is integrated into an aluminum-plastic membrane of a lithium-ion battery packaging material, so that the aluminum-plastic membrane has a fire-retardant function. However, a fire-retardant effect of the aluminum-plastic membrane cannot be brought into full play in some extreme thermal-runaway cases. For example, in a needling test, a temperature in an area of a needling point increases rapidly while temperature in most areas surrounding the needling point still maintains at a room temperature level. In this case, only a small part of a fire-retardant coating of the needling point reaches temperature at which thermal decomposition is performed on the fire-retardant coating, to a small amount of fire-retardant gas, while the fire-retardant coating in the most areas surrounding the needling point is far below the temperature for thermal decomposition of the fire-retardant coating and therefore maintains in an original state and does not have a fire-retardant function. The small amount of fire-retardant gas cannot effectively prevent thermal runaway; therefore, the temperature in the area of the needling point continues to increase rapidly until a melting temperature of an aluminum foil layer is reached. Aluminum foil of the needling point melts or shrinks due to heat; as a result, the fire-retardant coating surrounding the needling point is further away from a thermal-runaway point, and the fire-retardant effect of the fire-retardant coating cannot be effectively brought into play. When the fire-retardant coating in the area surrounding the needling point reaches the temperature for thermal decomposition, thermal runaway in the area of the needling point already cannot be effectively prevented. Therefore, in this case, a safety accident may occur quite possibly.

In the case described above, when the battery packaging material described in this embodiment of this application is used, on one hand, the high-temperature-resistant layers are disposed above and below the metal layer, respectively. In this case, being isolated by the high-temperature-resistant layers, the metal layer maintains in a stable state instead of melting or shrinking rapidly due to high temperature, so that the fire-retardant material does not keep away from the thermal-runaway point due to melting or shrinking of metal by heat, and can bring a fire-retardant effect of the fire-retardant layer into play; on the other hand, when a fire-retardant function of the fire-retardant layer is brought into full play, thermal runaway can be effectively prevented, thereby avoiding melting of metal caused by sharp rising in temperature, and alleviating fireproof pressure of the high-temperature-resistant layers. Therefore, in this embodiment of this application, the high-temperature-resistant layers and the fire-retardant layer can function cooperatively, so that the battery packaging material has both a high-temperature-resistant characteristic and a fire-retardant characteristic, and therefore has a powerful and comprehensive fireproof function.

An embodiment of this application further provides a battery, where at least one of a positive electrode, a negative electrode, and an electrolyte of the battery is accommodated in a packaging container formed by the battery packaging material described in the foregoing embodiments.

An embodiment of this application further provides a terminal, where the terminal includes the foregoing battery.

It should be understood that numbers such as "first", "second", and "third" in the embodiments of this application are merely for differentiation for ease of description, and are not intended to limit the scope of the embodiments of this application. For example, the numbers are used for differentiation between different high-temperature-resistant layers, different bonding layers, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery packaging material, successively disposed with a protective layer, a metal layer, and an encapsulating layer from outside to inside, wherein
a first high-temperature-resistant layer is disposed between the metal layer and the protective layer;
a second high-temperature-resistant layer is disposed between the metal layer and the encapsulating layer; and
a fire-retardant layer is disposed above the protective layer, between the protective layer and the metal layer, between the metal layer and the encapsulating layer, or below the encapsulating layer.

2. The battery packaging material according to claim 1, wherein the first high-temperature-resistant layer is disposed on an upper surface of the metal layer, or the first high-temperature-resistant layer is disposed on a lower surface of the protective layer.

3. The battery packaging material according to claim 1 or 2, wherein the second high-temperature-resistant layer is disposed on a lower surface of the metal layer, or the second high-temperature-resistant layer is disposed on an upper surface of the encapsulating layer.

4. The battery packaging material according to any one of claims 1 to 3, wherein the first high-temperature-resistant layer is made from at least a high-temperature-resistant material, and the second high-temperature-resistant layer is made from at least a high-temperature-resistant material.

5. The battery packaging material according to claim 4, wherein the high-temperature-resistant material comprises a high-temperature-resistant organic silicon material or a high-temperature-resistant inorganic silicon material.

6. The battery packaging material according to claim 4 or 5, wherein the first high-temperature-resistant layer further comprises a fire-retardant material, the second high-temperature-resistant layer further comprises a fire-retardant material, the first high-temperature-resistant layer further comprises a bonding material, or the second high-temperature-resistant layer further comprises a bonding material.

7. The battery packaging material according to any one of claims 1 to 6, wherein the fire-retardant layer is disposed on a surface of at least one of the protective layer, the metal layer, and the encapsulating layer.

8. The battery packaging material according to any one of claims 1 to 7, wherein the fire-retardant layer is made from at least a fire-retardant material.

9. The battery packaging material according to claim 8, wherein the fire-retardant material comprises an organic fire-retardant material or an inorganic fire-retardant material, wherein
the organic fire-retardant material comprises at least one of the following: an organic halogen fire retardant, an organic phosphorus fire retardant, an isocyanurate fire retardant, and a melamine-based fire retardant; and
the inorganic fire retardant material comprises at least one of the following: magnesium oxide, magnesium hydroxide, aluminum oxide, aluminum hydroxide, ammonium phosphate, and ammonium polyphosphate.

10. The battery packaging material according to claim 8 or 9, wherein the fire-retardant layer further comprises a bonding material.

11. The battery packaging material according to any one of claims 1 to 10, wherein a third high-temperature-resistant layer is disposed above the protective layer.

12. The battery packaging material according to any one of claims 1 to 11, wherein the battery packaging material further comprises a bonding layer, and the bonding layer is disposed between the first high-temperature-resistant layer and the protective layer, the bonding layer is disposed between the metal layer and the first high-temperature-resistant layer, the bonding layer is disposed between the second high-temperature-resistant layer and encapsulating layer, or the bonding layer is disposed between the metal layer and the second high-temperature-resistant layer.

13. A battery, wherein at least one of a positive electrode, a negative electrode, and an electrolyte of the battery is accommodated in a packaging container formed by the battery packaging material according to any one of claims 1 to 12.
